# EUROPÄISCHE PATENTSCHRIFT

(11) **EP 2 885 155 B1**
(45) Veröffentlichungstag und Bekanntmachung des Hinweises auf die Patenterteilung: **31.10.2018**
(21) Anmeldenummer: 13763031.5
(22) Anmeldetag: 12.09.2013
(51) Int. Cl.: B60L 5/08, B60L 5/36

(54) **NICHT SCHIENENGEBUNDENES FAHRZEUG MIT VERBESSERTEN STROMABNEHMER**
NON-RAIL-BOUND VEHICLE WITH IMPROVED CURRENT COLLECTOR
VÉHICULE NON FERROVIAIRE AVEC COLLECTEUR DE COURANT AMÉLIORÉ

(30) Priorität: 28.09.2012 DE 102012217720
(43) Veröffentlichungstag der Anmeldung: 24.06.2015
(73) Patentinhaber: Siemens Mobility GmbH, 81739 München (DE)
(72) Erfinder: KEIL, Göran, 12557 Berlin (DE)
(86) Internationale Anmeldenummer: PCT/EP2013/068894
(87) Internationale Veröffentlichungsnummer: WO 2014/048761

(56) Entgegenhaltungen:
- EP-A1- 0 043 763
- CH-A- 171 571
- DE-A1- 3 428 086
- FR-A1- 2 506 234

## Beschreibung

Die Erfindung bezieht sich auf ein nicht schienengebundenes Fahrzeug nach dem Oberbegriff des Patentanspruches 1.

Es ist hinlänglich bekannt, schienengebundene Fahrzeuge, wie zum Beispiel elektrische Lokomotiven, Züge und Straßenbahnen, zur Traktionsversorgung mit Stromabnehmern auszustatten, die zur Einspeisung elektrischer Energie in das Fahrzeug einen Fahrdraht einer Fahrleitungsanlage beschleifen. Durch die Spurführung der Schienen kann eine definierte Relativlage zwischen dem wenigstens einen Fahrdraht und dem Schienenfahrzeug eingehalten werden, die im Normalbetrieb eine sichere Aufrechterhaltung eines Schleifkontakts zwischen Stromabnehmer und Fahrdraht ermöglicht. Weit weniger verbreitet ist die externe Energieeinspeisung in elektrisch betriebene Fahrzeuge, die nicht schienengebunden sind.

So ist beispielsweise aus der Patentschrift DE 32 44 945 C1 ein zweipoliges Oberleitungssystem für elektrisch angetriebene Fahrzeuge des öffentlichen Personennahverkehrs bekannt. Von den zwei parallel verlaufenden Oberleitungsdrähten ist einer gegenüber Erde Spannung führend und der andere dient als Nullleiter. Ein O-Bus ist mit einem Paar von Stangenstromabnehmern ausgerüstet, um in dem Oberleitungssystem verkehren zu können. Im Betrieb nimmt das Paar von Stangenstromabnehmern einen gegenüber der Horizontalen angestellten Zustand ein, in dem ihre Gleitschuhe ordnungsgemäß an den beiden Oberleitungsdrähten anliegen. Die Stromabnehmerstangen stehen unter der Kraft einer Aufrichtfeder, die für den nötigen Andruck der Gleitschuhe an die Oberleitungsdrähte sorgt. Die Stangenstromabnehmer sind am Dach des O-Busses um eine horizontale und quer zur Fahrtrichtung verlaufende Achse angelenkt, um abgesenkt und wieder hochgefahren werden zu können. Zur Kompensation von seitlichen Fahrabweichungen relativ zum Verlauf der Oberleitungsdrähte sind die Stangenstromabnehmer auch um eine vertikale Achse drehbar, um den Gleitkontakt zu den Oberleitungsdrähten halten zu können. O-Busse sind jedoch spurgebundene Fahrzeuge, da starke Ausweichmanöver oder Überholmanöver, die ein Verlassen der Fahrspur bedingen, zu einem Kontaktverlust der Stangenstromabnehmer mit den Oberleitungsdrähten führt.

Die Offenlegungsschrift DE 102 56 705 A1 offenbart ein nicht schienengebundenes Fahrzeug, wie es als Lastwagen im Tagebau zum Transport von Erz, Kohle oder Abraum eingesetzt werden. Zur Versorgung eines Elektromotors des Fahrzeugs sind zwei Pantografen vorhanden, die im Betrieb über Schleifleisten mit Fahrdrähten einer zweipoligen Oberleitung in Kontakt stehen. Damit das Fahrzeug stets nur so gelenkt wird, dass die Schleifleisten die Fahrdrähte nicht verlassen, sind an den Pantografen Sensorleisten angeordnet, die Magnetfeldsensoren tragen. Diese bestimmen die magnetische Feldstärke des vom Strom im Fahrdraht erzeugten Magnetfeldes so genau, dass aus dem gemessenen Feldstärkewert der Abstand des Sensors zum Fahrdraht bestimmt werden kann. Die Information über die Position des Sensors relativ zum Fahrdraht und damit über die Position des Pantografen und damit des gesamten Fahrzeugs zum Fahrdraht kann mittels einer Anzeigeeinheit dem Fahrzeugführer mitgeteilt werden, so dass dieser sofort geeignete Lenkbewegungen ausführen kann. Es ist auch möglich, die Informationen der Sensoren einer Steuereinheit für eine automatische Lenkung des Fahrzeuges zuzuführen.

Aus FR 2 506 234 A1 ist ein Oberleitungsbus mit einem Stangen-Stromabnehmer bekannt, der nur eine Stange aufweist, deren eines Ende auf dem Fahrzeugdach derart drehbar angelenkt ist, dass die Stange um eine vertikale Schwenkachse und um eine horizontale Hubachse drehbar ist. Zum Anpressen des Stromabnehmers an Fahrdrähte einer zweipoligen Oberleitungsanlage sind Schraubenfedern vorgesehen. Am anderen Ende der Stange ist ein Gelenk angeordnet, welches ein Querrohr mittig fasst. An den beiden freien Enden des Querrohrs sind Gelenke angeordnet, in welchen je ein Ende eines Kopfrohrs gelagert ist. An den anderen Enden des Kopfrohrs sind je ein Kontaktschuh mit Schleifplatte befestigt. Jeder Kontaktschuh ist um eine horizontale Achse drehbar in seinem Kopfrohr gelagert. Zur Ausführung einer Drehbewegung des Stromabnehmers um die vertikale Schwenkachse ist ein Motor vorgesehen.

DE 34 28 086 A1 offenbart einen Halbscheren-Stromabnehmer für Hochgeschwindigkeitszüge, dessen Unterarm ein quer zur Fahrzeuglängsachse verlaufendes Basisrohr aufweist, um welches der Unterarm um eine horizontale Achse drehbar ist. Mit dem Basisrohr ist über einen Träger und ein Gummiverdrehelement eine Gewindespindel drehstarr verbunden, auf die ein Schwunggewicht aufgeschraubt ist. Durch Verdrehung kann das Schwunggewicht auf der Gewindespindel verschoben werden und damit die wirksame Länge des biegeelastischen Elementes eingestellt werden. Die Masse des Schwunggewichts kann durch Hinzufügen oder Wegnehmen von Scheiben verändert werden. Durch das Gummiverdrehelement wird eine Schwingung des Schwunggewichts in einer senkrecht zur Achse des Basisrohrs liegenden Ebene ermöglicht. Durch verschiedene Typen von Gummiverdrehelementen kann die Eigenfrequenz des Schwingungstilgers abgestuft werden.

An den von O-Bussen bekannten Stangenstromabnehmern ist es nachteilig, dass ein An- und Abdrahten von Fahrzeugen relativ schwierig ist und dass bei ruckartigen Lenkbewegungen es zu Stangenentgleisungen, das heißt zu einem Kontaktverlust der Gleitschuhe mit den Oberleitungsdrähten, kommen kann. Damit ist dieses System ungeeignet für Fahrbahnen, die eine wenigstens streckenweise elektrifizierte Fahrspur aufweisen, zu der parallel nicht elektrifizierte Fahrspuren verlaufen, beispielsweise auf mehrspurigen Autobahnen. Schließlich sind Stangenstromabnehmer auch unsicher bei höheren Fahrgeschwindigkeiten von 80 bis 100 km/h, wie sie von Nutzfahrzeugen auf Autobahnen gefahren werden dürfen.

Die von Tagebaufahrzeugen bekannten Lösungen mit je einem Stromabnehmer pro Fahrdraht haben den Nachteil, dass größere seitliche Fahrzeugbewegungen von über 0,4 m zu einem Kontaktverlust mit der Oberleitung führen können. Um solche Kontaktverluste zu vermeiden, kann die Stromabnehmeranordnung auch breiter als das Fahrzeug gestaltet werden, was aber auf öffentlichen Straßen außerhalb eines Tagebauareals gefährlich und gemäß Straßenverkehrsordnung nicht zulässig ist.

Der Erfindung liegt daher die Aufgabe zugrunde, ein gattungsgemäßes Fahrzeug bereitzustellen, dessen Stromabnehmer beim Betrieb auf mehrspurigen Fahrbahnen mit einer wenigstens abschnittsweise elektrifizierten Fahrspur auch bei höheren Fahrgeschwindigkeiten von beispielsweise 80 bis 100 km/h sicher an- und abdrahtbar ist und dabei zuverlässig den Kontakt zum Fahrdraht halten kann.

Die Erfindung löst die Aufgabe durch ein gattungsgemäßes Fahrzeug mit den im kennzeichnenden Teil des Patentanspruches 1 angegebenen Merkmalen. Demnach weist die Wippenanordnung Schleifleisten auf, durch welche die Fahrdrähte kontaktierbar sind. Hierdurch können Spurungenauigkeiten im Lenkverhalten des Fahrzeugführers durch Nachstellen des Stromabnehmers ausgeglichen und die Schleifleisten des Stromabnehmers sicher in Schleifkontakt mit den Fahrdrähten gehalten werden. Hierzu wird vorzugsweise durch fahrzeugseitige und weiter vorzugsweise durch stromabnehmerseitige Sensoren, etwa optische oder induktive Sensoren, die Relativlage des Fahrzeugs beziehungsweise Stromabnehmers zu den Fahrdrähten erfasst und einem Steuergerät der Stelleinrichtung zur Ermittlung einer Stellgröße zugeführt. Erfindungsgemäß ist im Bereich der Wippenanordnung ein

Schwingungstilger angeordnet, der zur Dämpfung einer in Stellbewegungsrichtung anregbaren Eigenschwingung der Wippenanordnung ausgebildet ist. Eigenschwingungen der Wippenanordnung resultieren aus der Geometrie des langgestreckten Gestänges mit seinen Elastizitäten sowie aus der Verteilung der relativ hohen Masse der Wippenanordnung am antriebslosen Lastende des Gestänges. Am angetriebenen Kraftende des Gestänges greift das Drehmoment des Stellantriebes mit dem Ziel an, die Stellbewegung zur Nachführung des Stromabnehmers möglichst schnell auszuführen, wobei die Wippenanordnung zu Schwingungen angeregt werden kann. Erfindungsgemäß wird eine Anregung von Eigenschwingungen durch Schwingungstilger gedämpft, wodurch ein unerwünschtes Resonanzphänomen unterdrückt wird. Durch diese Maßnahme kann auf eine Versteifung der Stromabnehmer- und/oder Stellantriebskonstruktion zur Dämpfung von Eigenschwingungen und dadurch wiederum mit Vorteil auf übermäßiges Gesamtgewicht von Stromabnehmer und Stelleinrichtung verzichtet werden. Durch Unterdrückung von Resonanzschwingungen der Wippenanordnung wird auch eine damit einhergehende Verschiebung der Phasenlage zwischen erregendem Stellantrieb und schwingender Wippenanordnung vermieden, wodurch in vorteilhafter Weise eine störende Rückkopplung auf die Drehmomentregelung des Stellantriebs ausbleibt. Insgesamt kann die seitliche Nachführung des Stromabnehmers in geringer Stellzeit durch einen leistungsstarken Stellantrieb umgesetzt werden, um eine sichere Kontakthaltung von Schleifleisten und Fahrdrähten während des Fahrbetriebs zu gewährleisten.

In einer vorteilhaften Ausführungsform des erfindungsgemäßen Fahrzeugs ist die Wippenanordnung an einem Querbalken des Gestänges um eine horizontal und quer zur Fahrzeuglängsachse verlaufende Drehachse drehbar gelagert, wobei der Schwingungstilger am Querbalken befestigt ist. Die horizontale Schwingung der Wippenanordnung quer zur Fahrzeuglängsachse erfährt durch den Stellantrieb den größten Energieeintrag. Durch Anordnung des Schwingungstilgers am Querbalken hat dessen Wirkungslinie etwa denselben Abstand vom Fußpunkt der Schwingung wie der Massenschwerpunkt der Wippenanordnung. Werden beispielsweise zwei Schwingungstilger symmetrisch zur Fahrzeuglängsebenen angeordnet, ist die Dämpfungswirkung besonders effektiv.

In einer bevorzugten Ausgestaltung des erfindungsgemäßen Fahrzeugs weist der Schwingungstilger ein Gewichtsstück, welches längs einer Führungsstange verschiebbar angeordnet ist, eine mit dem Gewichtsstück gekoppelte Federanordnung zur Erzeugung einer federelastischen Rückstellkraft bei Verschiebung des Gewichtsstückes aus seiner Gleichgewichtslage, und ein mit dem Gewichtsstück gekoppeltes Reibglied zur Erzeugung einer Reibungskraft bei Verschiebung des Gewichtsstückes auf. Durch diese Anordnung ist das Gewichtsstück federelastisch an die Wippenanordnung gekoppelt, wobei das Gewichtsstück der Schwingungsbewegung der Wippenanordnung mit einer gewissen Verzögerung folgt. Die Bewegungsenergie des Gewichtsstückes wird dabei durch seine Kopplung mit dem Reibglied in Wärmeenergie umgewandelt und damit der Wippenanordnung entzogen. Hierbei sind die Masse des Gewichtsstückes und die Federkonstante der Federanordnung an die zu dämpfende Masse der Wippenanordnung und deren zu tilgender Eigenfrequenz anzupassen. Eine weitere Konfigurationsgröße stellt die Dämpfungskonstante des Reibgliedes dar. Die konkrete Auslegung dieser Konfigurationsgrößen hängt von den tatsächlichen Gegebenheiten des Fahrzeugs und seines Stromabnehmers ab und ist dem Fachmann an sich bekannt.

Vorzugsweise weist der Schwingungstilger eines erfindungsgemäßen Fahrzeugs ein rohrförmiges Gehäuse auf, in welchem die Führungsstange angeordnet ist, wobei das Gewichtsstück ein Durchgangsloch für die Führungsstange aufweist, und wobei die Federanordnung durch zwei mit dem Gewichtsstück gekoppelte Schraubenfedern gebildet ist, welche an je einem stirnseitigen Gehäuseende befestigt sind. Hierdurch wird eine definiert geführte Bewegung des Gewichtsstückes erreicht. Außerdem kann der Schwingungstilger einfach über das Gehäuse am Querbalken der Wippenanordnung befestigt werden. Ferner bietet das Gehäuse eine Schutzkapselung gegen Umwelteinflüsse.

Weitere Vorteile und Eigenschaften ergeben sich aus nachfolgender Beschreibung eines Ausführungsbeispiels eines erfindungsgemäßen Fahrzeugs anhand der Zeichnungen, in deren
- FIG 1: ein erfindungsgemäßes Fahrzeug in Richtung der Fahrzeuglängsachse und
- FIG 2: ein dem Stromabnehmer des Fahrzeugs aus FIG 1 zugeordneter Schwingungstilger
schematisch veranschaulicht sind.

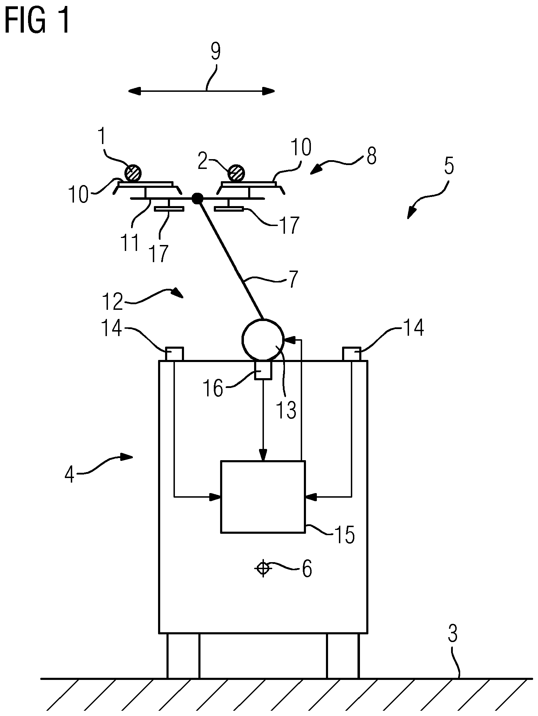

Gemäß FIG 1 ist eine zweipolige Oberleitungsanlage mit einem Hinleiter 1 und einem zu diesem parallel verlaufenden Rückleiter 2 zur Elektrifizierung einer Fahrspur 3 vorgesehen. Hin- und Rückleiter 1 und 2 der Oberleitungsanlage werden nachfolgend auch als Fahrdrähte 1 und 2 bezeichnet. Sie sind mittels nicht dargestellter Infrastruktureinrichtungen, wie Masten, Ausleger, Seitenhalter, Tragseilen, Hängern und dergleichen, etwa mittig oberhalb der Fahrspur 3 angeordnet. Die Fahrspur 3 kann beispielsweise die rechte Fahrspur einer mehrspurigen Autobahn sein. Hierdurch ist es möglich, in ein nicht schienengebundenes Fahrzeug 4 mit einem Stromabnehmer 5 elektrische Energie einzuspeisen, um einem elektrischen oder dieselelektrischen Traktionsantrieb des Fahrzeugs 4 Traktionsenergie zuzuführen oder um Bremsenergie des Fahrzeugs 4 an die Oberleitungsanlage abzuführen.

Der Stromabnehmer 5 ist bezüglich einer Fahrzeuglängsachse 6 des Fahrzeugs 4 hinter einer Fahrerkabine und vor einem Ladeaufbau angeordnet, die nicht im Detail dargestellt sind. Der Stromabnehmer 5 weist ein langgestrecktes Gestänge 7 auf, das an seinem unteren Ende am Fahrzeug 4 angelenkt ist und an seinem oberen Ende eine Wippenanordnung 8 trägt. Das Gestänge 7 ist in FIG 1 nur schematisch durch eine Verbindungslinie dargestellt und kann in Realität je nach Ausgestaltung mehrere Tragholme oder auch Stellzylinder zur teleskopartigen Längenveränderung aufweisen. In jedem Fall ist das Gestänge 7 aber derart verschwenkbar, dass die Wippenanordnung 8 eine horizontale und quer zur Fahrzeuglängsachse 6 gerichtete Stellbewegung 9 ausführen kann, um Schleifleisten 10 der Wippenanordnung 8 bei Lenkungenauigkeiten des Fahrzeugs 4 in Schleifkontakt zu den Fahrdrähten 1 und 2 zu halten.

Die Wippenanordnung 8 ist über einen horizontal und quer zur Fahrzeuglängsachse 6 angeordneten Querbalken 11, welcher eine Drehachse für die Wippbewegung der Wippenanordnung 8 definiert, mit dem Gestänge 7 verbunden. Die Wippenanordnung 8 umfasst zwei Wippen mit jeweils zwei in Fahrtrichtung hintereinander angeordneten und über Federungen gelagerten Schleifleisten 10, auf welchen Kontaktstücke angebracht sind und an deren seitlichen Enden nach unten geneigte Auflaufhörner angeordnet sind. Jedes Paar hintereinander angeordneter Schleifleisten 10 beschleift einen der Fahrdrähte 1 beziehungsweise 2.

Die Stellbewegung 9 der Wippenanordnung 8 wird durch eine fahrzeugseitige Stelleinrichtung 12 erzeugt, die einen Stellantrieb 13 mit nicht dargestelltem Getriebe aufweist und am Fahrzeug 4 befestigt ist. Diese Stellbewegung 9 kann über nicht dargestellte Koppelgelenke auf das Gestänge 7 übertragen werden. Die Stellgröße für die Stellbewegung 9 wird über ein Regelsystem vorgegeben, zu dem Sensormittel 14 zur Erfassung der Lage des Fahrzeugs 4 relativ zu den Oberleitungsfahrdrähten 1 und 2 und eine mit den Sensormitteln 14 und dem Stellantrieb 13 verbundene Steuereinrichtung 15.

Die Sensormittel 14 können beispielsweise durch eine Videokamera mit Bildauswertung gebildet werden. Im dargestellten Ausführungsbeispiel umfassen die Sensormittel 14 jedoch zwei Messgeräte zur Messung einer Magnetfeldstärke des von den Fahrdrähten 1 und 2 am Ort der Messgeräte erzeugten Magnetfeldes. Das Magnetfeld wird beispielsweise durch den zur Traktionsversorgung in den Fahrdrähten 1 und 2 fließenden Strom erzeugt. Fährt das Fahrzeug 4 mittig unter den Fahrdrähten 1 und 2, so messen beide Messgeräte die gleichen Magnetfeldstärken H. Fährt das Fahrzeug 4 außermittig, steigt die vom einen Messgerät gemessene Magnetfeldstärke, während die vom anderen fällt und umgekehrt. So kann die Relativlage des Fahrzeugs 4 zur Oberleitungsanlage erfasst werden.

Mit dem Stellantrieb 13 ist eine Messeinrichtung 16 zur Bestimmung einer aktuellen Wippenauslenkung, beispielsweise die momentane seitliche Auslenkung des Gestänges 7 von einer Neutralstellung, die wiederum einer eindeutigen Schleifleistenlage relativ zum Fahrzeug 4 entspricht. Die Information der Wippenauslenkung und/oder der Fahrzeuglage wird fortwährend der Steuereinrichtung 15 zugeführt. Die Steuereinrichtung 15 steuert nun den Stellantrieb 13 derart an, dass in Abhängigkeit der von den Sensormitteln 14 erfassten Fahrzeuglage die Schleifleisten 10 den Kontakt zu den Fahrdrähten 1 und 2 innerhalb ihres Arbeitsbereiches b halten. Die Steuereinrichtung 15 ermittelt somit, um welchen Weg die Wippenanordnung 8 seitlich verschwenkt werden muss, damit die Schleifleisten 10 die Fahrdrähte 1 und 2 in ihrem Arbeitsbereich b beschleifen. Derartige Steuereingriffe können bei Fahrungenauigkeiten aber auch bei Ausweich- oder Überholmanöver erforderlich sein. Sie können auch erforderlich sein, wenn die Fahrdrähte 1 und 2 nicht mittig oberhalb der Fahrspur 3 verlaufen, wie dies beispielsweise bei Fahrbahnkurven der Fall ist.

Bei Ausführung der Stellbewegung erfolgt durch den Stellantrieb 13 ein Energieeintrag in den Stromabnehmer 5, der das langgestreckte Gestänge 7 und die daran angelenkte Wippenanordnung 8 zu Schwingungen vor allem in Stellbewegungsrichtung 9 anregt. Besonders zu beachten ist dabei, wenn Schwingungen mit einer Eigenfrequenz der Wippenanordnung 8 erzwungen werden. Zur Vermeidung von diesbezüglichen Rückkopplungen auf den als Servomotor ausgebildeten Stellantrieb 13 und auf die Steuereinrichtung 15 sind am Querbalken 11 symmetrisch zwei Schwingungstilger 17 angeordnet. Die Schwingungstilger 17 sind so ausgelegt, dass eine in Stellbewegungsrichtung 9 anregbare Eigenschwingung der Wippenanordnung 8 gedämpft wird.

Hierdurch kann eine Stellbewegung mit kurzer Stellzeit realisiert werden, um eine sichere Kontakthaltung zwischen Stromabnehmer 5 und Fahrdrähten 1 und 2 zu gewährleisten.

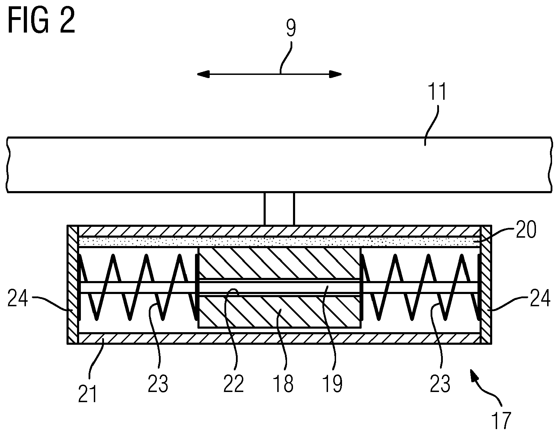

Gemäß FIG 2 weist jeder der mit dem Querbalken 11 verbundenen Schwingungstilger 17 ein zylindrisches Gewichtsstück 18 auf, welches axial von einem Durchgangsloch 22 durchsetzt ist. Das Durchgangsloch 22 dient der Aufnahme einer Führungsstange 19, entlang der das Gewichtsstück 18 verschiebbar ist. Zum Schutz gegen Umwelteinflüsse sind das Gewichtsstück 18 und die Führungsstange 19 in einem zylindrischen Gehäuse 21 angeordnet, an dem der Schwingungstilger 17 über Verbindungsmittel am Querbalken 11 derart befestigt ist, dass das Gewichtsstück 18 in Stellbewegungsrichtung 9 verschiebbar ist. Das Gehäuse 21 ist an seinen stirnseitigen Gehäuseenden 24 verschlossen. Das Gewichtsstück 18 ist mit einer Federanordnung zur Erzeugung einer federelastischen Rückstellkraft bei Verschiebung des Gewichtsstückes 18 aus seiner Gleichgewichtslage gekoppelt. Die Federanordnung weist zwei Schraubenfedern 23 auf, die beiderseits des Gewichtsstückes 18 angeordnet sind und sich jeweils an dem Gewichtsstück 18 und an einem Gehäuseende 24 abstützen. Ferner ist im Gehäuse 21 ein Reibglied 20 angeordnet, welches derart mit dem Gewichtsstück 18 gekoppelt ist, dass dessen Verschiebebewegung eine Reibungskraft überwinden muss.

Wird nun im Betrieb des Fahrzeugs 4, beispielsweise bei Ausführung einer Stellbewegung durch eine Drehmomentübertragung des Stellantriebs 13 auf die Wippenanordnung 8, eine Eigenschwingung der Wippenanordnung 8 angeregt, werden die Schwingungstilger 17 angesprochen. Durch eine gezielte Auslegung der Masse des Gewichtsstückes 18 im Vergleich zur Masse der schwingenden Wippenanordnung 8 sowie der Federkonstanten der Schraubenfedern 23 und des Reibungswertes des Reibgliedes 20 dämpfen diese die erzwungene Eigenschwingung und verhindern, dass der Stromabnehmer 5 in Resonanzschwingung gerät. Die Gewichtsstücke 18 folgen dabei phasenverschoben der Schwingungsbewegung der Wippenanordnung 8. Bei der Verschiebebewegung des Gewichtsstückes 18 entlang des Reibgliedes 20 wird Schwingungsenergie in Wärmeenergie umgewandelt, was zu einer Dämpfung der Erregerschwingung führt.

Schwingung ist die in Querrichtung bezüglich Fahrtrichtung. Besser ausgedrückt handelt es sich eigentlich um eine Drehschwingung um den Fußpunkt des Stromabnemers 5 mit einer Schwingungsebene mehr oder weniger parallel zur Fahrbahn. Diese kann jedoch rechnerisch einer Linearschwingung angenähert werden. Sie hat im konkreten Ausführungsbeispiel eine Resonanzfrequenz von etwa 4,9 Hz. Natürlich werden auch allerhand andere Schwingungsarten angeregt, nur diese erfährt den höchsten Energieeintrag, weil der Stromabnehmer 5 hier schnell bewegt werden muss und deshalb einen leistungsstarken Elektroantrieb besitzt.

Der Einsatz der Schwingungstilger 17 am Lastende des Gestänges 7 bewirkt eine deutliche Reduzierung der Resonanzamplitude und dadurch eine geringere Rückwirkung von Schwingungen auf den geregelten Stellantrieb 13. Damit ist im Vergleich zu Stromabnehmern ohne Schwingungstilger 17 bei Stellantrieben 13 mit vergleichbaren Antriebsmomenten eine Verringerung der Nachstellzeit des Stromabnehmers 5 möglich. Neben einer wirkungsvollen Schwingungsdämpfung weisen die Schwingungstilger 17 ein kleines Bauvolumen und eine geringe Masse auf. Als Verhältnis der Massen der Gewichtsstücke 18 zu der des Stromabnehmers 5 wird vorzugsweise etwa 0.04 gewählt. Die Federkonstanten der Schraubenfedern 23 müssen so ausgelegt werden, dass bei diesem Massenverhältnis die Eigenfrequenz des Schwingungssystems Gewichtsstück-Federanordnung der zu dämpfenden Eigenfrequenz des Stromabnehmers 5 entspricht.

Durch die erfindungsgemäße Lösung lässt sich ein Stromabnehmer 5 für ein nicht schienengebundenes Fahrzeug 4 aufbauen, der den Erfordernissen an Reaktionsschnelligkeit seiner Antriebsregelung entspricht und gleichzeitig die Gesamtkosten minimiert.

## Patentansprüche

1. Nicht schienengebundenes Fahrzeug (4), insbesondere Lastkraftwagen oder Bus, mit einem Stromabnehmer (5) zur Einspeisung elektrischer Energie aus einer zweipoligen Oberleitung, welche als Hin- und Rückleiter ausgebildete Fahrdrähte (1, 2) aufweist, wobei der Stromabnehmer (5) ein Gestänge (7) aufweist, welches fahrdrahtseitig eine Wippenanordnung (8) trägt und fahrzeugseitig mit einer Stelleinrichtung (12) zur Ausführung einer quer zu einer Fahrzeuglängsachse (6) gerichteten Stellbewegung (9) der Wippenanordnung (8) relativ zum Fahrzeug (4) gekoppelt ist,
**dadurch gekennzeichnet, dass** die Wippenanordnung (8) Schleifleisten (10) aufweist, durch welche die Fahrdrähte (1, 2) kontaktierbar sind, und dass im Bereich der Wippenanordnung (8) ein Schwingungstilger (17) angeordnet ist, der zur Dämpfung einer in Stellbewegungsrichtung (9) anregbaren Eigenschwingung der Wippenanordnung (8) ausgebildet ist.

2. Fahrzeug (4) nach Anspruch 1, wobei die Wippenanordnung (8) an einem Querbalken (11) des Gestänges (7) um eine horizontal und quer zur Fahrzeuglängsachse (6) verlaufende Drehachse drehbar gelagert ist, wobei der Schwingungstilger (17) am Querbalken (11) befestigt ist.

3. Fahrzeug (4) nach Anspruch 1 oder 2, wobei der Schwingungstilger (17) ein Gewichtsstück (18), welches längs einer Führungsstange (19) verschiebbar angeordnet ist, eine mit dem Gewichtsstück (18) gekoppelte Federanordnung zur Erzeugung einer federelastischen Rückstellkraft bei Verschiebung des Gewichtsstückes (18) aus seiner Gleichgewichtslage, und ein mit dem Gewichtsstück (18) gekoppeltes Reibglied (20) zur Erzeugung einer Reibungskraft bei Verschiebung des Gewichtsstückes (18) aufweist.

4. Fahrzeug (4) nach Anspruch 3, wobei der Schwingungstilger (17) ein rohrförmiges Gehäuse (21) aufweist, in welchem die Führungsstange (19) angeordnet ist, wobei das Gewichtsstück (18) ein Durchgangsloch (22) für die Führungsstange (19) aufweist, und wobei die Federanordnung durch zwei mit dem Gewichtsstück (18) gekoppelte Schraubenfedern (23) gebildet ist, welche an je einem stirnseitigen Gehäuseende (24) befestigt sind.

## Claims

1. Non-rail-bound vehicle (4), in particular a truck or bus, having a current collector (5) for feeding electrical energy from a two-pole overhead contact line, the contact wires (1, 2) of which are formed as feed and return conductors, wherein the current collector (5) has a linkage (7) which on the contact wire side carries a rocker arrangement (8) and on the vehicle side is coupled to an adjusting device (12) for execution of an adjusting movement (9) of the rocker arrangement (8) oriented transversally to the vehicle longitudinal axis (6) relative to the vehicle (4), **characterised in that** the rocker arrangement (8) has contract strips (10) by which the contact wires (1, 2) can be contacted, and that in the region of the rocker arrangement (8) a vibration damper (17) is arranged, which is designed to damp an intrinsic vibration of the rocker arrangement (8) which can be stimulated in the adjusting movement direction (9) .

2. Vehicle (4) according to claim 1, wherein the rocker arrangement (8) is mounted on a cross-bar (11) of the linkage (7) so as to rotate about an axis of rotation which runs horizontally and transversally to the vehicle longitudinal axis (6), the vibration damper (17) being attached to the cross-bar (11).

3. Vehicle (4) according to claim 1 or 2, wherein the vibration damper (17) has a weight (18) which is displaceably arranged along a guide rod (19), a spring arrangement coupled to the weight (18) for generating a spring-loaded restoring force when the weight (18) is displaced from its position of equilibrium, and a friction member (20) coupled to the weight (18) for generating a friction force when the weight (18) is displaced.

4. Vehicle (4) according to claim 3, wherein the vibration damper (17) has a tubular housing (21), in which the guide rod (19) is arranged, wherein the weight (18) has a through-hole (22) for the guide rod (19), and wherein the spring arrangement is formed by two screw springs (23) which are coupled to the weight (18) and are attached to a housing end face (24) in each case.

## Revendications

1. Véhicule (4) non-ferroviaire, notamment camion ou autobus, comprenant un pantographe (5) de prise de courant pour injecter de l'énergie électrique d'une ligne de contact, qui a des fils (1, 2) de contact constitués en conducteur aller et conducteur retour, le pantographe (5) de prise de courant ayant une tringle (7), qui porte, du côté du fil de contact, un agencement (8) d'archet et qui, du côté du véhicule, est couplée à un dispositif (12) de réglage pour l'exécution d'un mouvement (9) de réglage, dirigé transversalement à un axe (6) longitudinal du véhicule, de l'agencement (8) d'archet par rapport au véhicule (4),
**caractérisé en ce que** l'agencement (8) d'archet a des frotteurs (10), par lesquels les fils (1, 2) de contact peuvent être contactés, et **en ce que**, dans la région de l'agencement (8) d'archet, est disposé un amortisseur (17) d'oscillation constitué pour amortir une oscillation propre excitable dans la direction (9) du mouvement de réglage de l'agencement (8) d'archet.

2. Véhicule (4) suivant la revendication 1, dans lequel l'agencement (8) d'archet est monté tournant sur une traverse (11) de la tringle (7) autour d'un axe de rotation s'étendant horizontalement et transversalement à l'axe (6) longitudinal du véhicule, l'amortisseur (17) d'oscillation étant fixé à la traverse (11).

3. Véhicule (4) suivant la revendication 1 ou 2, dans lequel l'amortisseur (17) d'oscillation a une masselotte (18), montée coulissante le long d'une tige (19) de guidage, un agencement de ressort couplé à la masselotte (18) pour produire une force de rappel ayant l'élasticité d'un ressort, lorsque la masselotte (18) sort de sa position d'équilibre, et un organe (20) de frottement couplé à la masselotte (18) pour produire une force de frottement, lorsque la masselotte (18) coulisse.

4. Véhicule (4) suivant la revendication 3, dans lequel l'amortisseur (17) d'oscillation a un boîtier (21) tubulaire, dans lequel est disposée la tige (19) de guidage, la masselotte (18) ayant un trou (22) traversant pour la tige (19) de guidage, et dans lequel l'agencement de ressort est formé de deux ressorts (23) hélicoïdaux, qui sont couplés à la masselotte (18) et qui sont fixés à respectivement une extrémité (24) du boîtier du côté frontal.
